(19) Europäisches Patentamt
European Patent Office
Office européen des brevets

(11) **EP 4 100 262 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **21701661.7**

(22) Anmeldetag: **18.01.2021**

(51) Internationale Patentklassifikation (IPC):
*B42D 25/324* (2014.01)    *B42D 25/351* (2014.01)
*B42D 25/373* (2014.01)    *B42D 25/29* (2014.01)
*B42D 25/425* (2014.01)    *G02B 5/18* (2006.01)
*G02B 5/22* (2006.01)    *G02B 27/42* (2006.01)

(52) Gemeinsame Patentklassifikation (CPC):
**B42D 25/29; B42D 25/324; B42D 25/351; B42D 25/373; B42D 25/425; G02B 5/085; G02B 5/09; G02B 27/06**

(86) Internationale Anmeldenummer:
**PCT/EP2021/025014**

(87) Internationale Veröffentlichungsnummer:
**WO 2021/155999 (12.08.2021 Gazette 2021/32)**

(54) **OPTISCH VARIABLES SICHERHEITSELEMENT**

OPTICALLY VARIABLE SECURITY ELEMENT

ÉLÉMENT DE SÉCURITÉ OPTIQUEMENT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2020 DE 102020000732**

(43) Veröffentlichungstag der Anmeldung:
**14.12.2022 Patentblatt 2022/50**

(60) Teilanmeldung:
**25157311.9**

(73) Patentinhaber: **Giesecke+Devrient Currency Technology GmbH**
**81677 München (DE)**

(72) Erfinder: **FUHSE, Christian**
**83624 Otterfing (DE)**

(74) Vertreter: **Giesecke+Devrient IP**
**Prinzregentenstraße 161**
**81677 München (DE)**

(56) Entgegenhaltungen:
**EP-A1- 3 216 620**    **EP-A1- 3 415 964**
**WO-A1-2020/011390**    **WO-A1-2020/011392**
**CH-A5- 691 750**

**Beschreibung**

Die Erfindung betrifft ein optisch variables Sicherheitselement zur Absicherung von Wertgegenständen mit einem reflektiven Flächenbereich, der zumindest zwei, aus unterschiedlichen Betrachtungsrichtungen erkennbare optisch variable Effekte zeigt. Die Erfindung betritt auch ein Verfahren zum Herstellen eines solchen Sicherheitselements sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck, eine andere perspektivische Ansicht und/oder ein anderes grafisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

Vor Kurzem wurden in der Druckschrift DE 10 2018 005 447 A1 bzw. WO 2020/011390 A1 optisch variable Sicherheitselemente vorgeschlagen, die zwei, in unterschiedlichen Höhenstufen angeordnete, und jeweils mit einer Farbbeschichtung versehene Reliefstrukturen aufweisen. Die Farbbeschichtung der höher liegenden Reliefstruktur ist als Raster strukturiert, so dass bei der Betrachtung des Sicherheitselements in den Rasterzwischenräumen die Farbbeschichtung der tiefer liegenden Reliefstruktur in Erscheinung tritt, das beim Kippen des Sicherheitselements einen übergangslosen Wechsel von einem ersten zu einem zwei Erscheinungsbild ermöglicht. In der Praxis ist die Realisierung der erforderlichen feinen Rasterung der Farbbeschichtung allerdings technologisch sehr anspruchsvoll. Zudem ist durch das Raster der reflektierte Lichtanteil der höher liegenden bzw. der tiefer liegenden Reliefstruktur entsprechend dem mit Rasterelementen bzw. Rasterzwischenräumen bedeckten Flächenbereich begrenzt. Auch WO 2020/011392 A1 zeigt einen ähnlichen Aufbau mit zwei Reliefstrukturen in zwei Höhenstufen. CH 691750 A5 betrifft einen optischen Informationsträger mit Beugungsstrukturen. EP 3415964 A1 beschreibt ein mehrschichtiges optisches Sicherheitselement mit zwei reflektierend wirkenden Grenzflächen zwischen Schichten mit bestimmten Brechungsindizes. EP 3216620 A1 betrifft ein optisches Sicherheitselement mit reflektiven Facetten in Pixeln, die bereichsweise zufällig oder einheitlich ausgerichtet sind. WO 2020/011390 A1 ist der nächstliegende Stand der Technik, erfordert jedoch zwei unterschiedlich farbliche Farbbeschichtungen und zudem Aussparungen bzw. ein Raster in der oberen Farbbeschichtung.

Ausgehend davon liegt der Erfindung die Aufgabe zugrunde, gattungsgemäße optisch variable Sicherheitselemente vorzuschlagen, die besonders einfach herzustellen sind und zudem ein attraktives, leuchtstarkes visuelles Erscheinungsbild aufweisen.

Diese Aufgabe wird durch die Merkmale der unabhängigen Ansprüche gelöst. Weiterbildungen der Erfindung sind Gegenstand der abhängigen Ansprüche.

Die Erfindung enthält zur Lösung der genannten Aufgabe ein in Anspruch 1 definiertes optisch variables Sicherheitselement.

Die erste reflexionserhöhende Beschichtung liegt im Merkmalsbereich vor und kann als zumindest semitransparent betrachtet werden. Sie wirkt einerseits reflektierend und andererseits hinreichend transmittierend, damit die zweite Reliefstruktur bzw. dessen optisch variabler Effekt sichtbar ist.

Erfindungsgemäß ist die erste reflexionserhöhende Beschichtung mit einer im sichtbaren Spektralbereich wellenlängenabhängigen Reflexion und Transmission ausgebildet.

Durch eine Reflexions-Farbwirkung der ersten reflexionserhöhenden Beschichtung zeigt die höher liegende Reliefstruktur den ersten optisch variablen Effekt in der ersten Farbe und durch eine Transmissions-Farbwirkung der ersten reflexionserhöhenden Beschichtung zeigt die tiefer liegende Reliefstruktur den zweiten optisch variablen Effekt in der zweiten Farbe.

Durch die Wellenlängenabhängigkeit der ersten reflexionserhöhenden Beschichtung wird die Sichtbarkeit der beiden optisch variablen Effekte verbessert. Insbesondere wird der Reflexionsgrad des Sicherheitselements erhöht. Die erste reflexionserhöhende Beschichtung wird so gewählt, dass sie für die erste Farbe eine hohen Reflexionsgrad und für die zweite Farbe einen hohen Transmissionsgrad aufweist. Somit kann die Helligkeit der beiden optisch variablen Effekte erhöht werden. Beispielsweise kann die Summe der Reflexionsgrade für die beiden Farben (und somit der beiden Effekte) größer als 1 sein.

Mit besonderem Vorteil sind die höher liegende Reliefstruktur und/oder die tiefer liegende Reliefstruktur durch Mikrospiegelanordnungen mit gerichtet reflektierenden Mikrospiegeln gebildet. Die Mikrospiegel sind dabei insbesondere durch nicht-diffraktiv wirkende Mikrospiegel gebildet. Sie erzeugen oder nutzen also keine Farbaufspaltung. Vorzugsweise können dabei plane Spiegel, Hohlspiegel und/oder fresnelartige Spiegel zum Einsatz kommen. Die lateralen Abmessungen der Mikrospiegel (bzw. einzelnen Elemente eines Fresnelspiegels) liegen dabei zweckmäßig unterhalb von 50 $\mu$m, vorteilhaft unterhalb von 20 $\mu$m, bevorzugt bei etwa 10 $\mu$m, also zwischen 7 $\mu$m und 13 $\mu$m. Auf der anderen Seite liegen die lateralen Abmessungen der Mikrospiegel aber auch oberhalb von 2 $\mu$m, insbesondere oberhalb von 3 $\mu$m oder sogar oberhalb von 5 $\mu$m. Die Ganghöhe der Mikrospiegel beträgt vorzugsweise weniger als 10 $\mu$m, bevorzugt weniger als 5 $\mu$m.

Grundsätzlich können anstelle von Mikrospiegeln auch andere Reliefstrukturen, insbesondere geprägte Fresnellinsen, Hohlspiegel, Hologrammstrukturen, Nanostrukturen oder diffraktive geblazte Gitter eingesetzt werden. Besonders vorteilhaft können hier achromatische Beugungsgitter, sogenannte Mattstrukturen verwendet werden, die im Wesentlichen weißes Licht reflektieren und somit die Farbwirkung der Beschichtung oder eventueller Farbschichten nicht durch die Erzeugung von Beugungsfarben stören. Zur Erzeugung bunter Farben in Transmission und/oder Reflexion können die Reliefstrukturen auch Subwellenlängenstrukturen, insbesondere Subwellenlängengitter, aufweisen, die in Kombination mit der jeweiligen reflexionserhöhenden Beschichtung deren Farbe bestimmt oder zumindest mitbestimmt. Beispielsweise kann eine Reliefstruktur eine Überlagerung einer Mikrospiegelstruktur mit darauf befindlichen Subwellenlängengittern darstellen, wobei die Orientierung der Mikrospiegel die Richtung des reflektierten Lichts bestimmt und die Subwellenlängengittern die Farbwirkung der auf die Reliefstruktur aufgebrachten reflexionserhöhenden Schicht modifiziert.

Die optisch variablen Effekte der beiden Reliefstrukturen sind erfindungsgemäß nicht deckungsgleich, sie sind vielmehr zumindest teilweise aus unterschiedlichen Betrachtungsrichtungen erkennbar. Insbesondere ist mit Vorteil vorgesehen, dass die erste und zweite Reliefstruktur zumindest bereichsweise einfallendes paralleles Licht in unterschiedliche Winkelbereiche reflektieren, wobei die beiden verschiedenen Winkelbereiche vorzugsweise nicht überlappen und bevorzugt mehr als 3°, besonders bevorzugt mehr als 10° voneinander getrennt sind.

Die beiden Reliefstrukturen sind eigenständige Reliefstrukturen. Sie können also frei gewählt werden, da sie (in ihrem Reliefmuster) nicht voneinander abhängen. Eine Reliefstruktur, die sich allein durch Beschichten einer anderen Reliefstruktur ergibt, ist keine eigenständige Reliefstruktur im vorliegenden Sinne. Die Reliefstrukturen des Flächenbereichs weisen insbesondere nicht das gleiche Reliefmuster auf, auch nicht das gleiche, nur in der Höhe skalierte Reliefmuster auf, sondern die beiden Reliefstrukturen sind unterschiedlich und mit unterschiedlichen Reliefmustern ausgebildet. Die beiden eigenständigen Reliefstrukturen sind insbesondere unterschiedlich. Die beiden Reliefstrukturen können daher gleichartige optisch variable Effekte erzeugen, beispielsweise gegenläufige Bewegungseffekte oder aus verschiedenen Betrachtungsrichtungen sichtbare räumliche Darstellungen, sie werden wegen der Verschiedenheit der Reliefmuster aber nicht beide denselben optisch variablen Effekt stets am selben Ort erzeugen.

Konkret kann die Ausbildung der höher liegenden Reliefstruktur, insbesondere die Ausrichtung der Mikrospiegel der höher liegenden Mikrospiegelanordnung und/oder die Ausbildung der tiefer liegenden Reliefstruktur, insbesondere die Ausrichtung der Mikrospiegel der tiefer liegenden Mikrospiegelanordnung mit Vorteil ortsabhängig variieren, um ein jeweils vorgegebenes Motiv, insbesondere ein dreidimensional wirkendes Motiv oder ein Bewegungsmotiv, zu erzeugen. Das Reliefmuster, insbesondere die Ausrichtung der Mikrospiegel ist dabei frei wählbar und im Wesentlichen nur durch die vorgegebenen Motive, nicht aber durch die Ausrichtung lateral oder vertikal benachbarter Mikrospiegel bestimmt.

In der vorliegenden Erfindung vereinigt die erste reflexionserhöhende Beschichtung zwei an sich gegenläufige Eigenschaften. Einerseits soll die erste reflexionserhöhende Beschichtung einen hohen Reflexionsgrad aufweisen, damit der optisch variable Effekt der ersten Reliefstruktur gut sichtbar ist, andererseits soll sie aber auch einen möglichst hohen Transmissionsgrad aufweisen, damit der optisch variable Effekt der zweiten Reliefstruktur gut sichtbar werden kann.

Grundsätzlich sind Reflexionsgrad und Transmissionsgrad nicht unabhängig voneinander, sondern die Energieerhaltung impliziert, dass für jedes Material die Summe aus Reflexionsgrad R, Transmissionsgrad T und Absorptionsgrad A gleich 1 (oder 100%) ist. Maximale Reflexion und maximale Transmission lassen sich daher nicht gleichzeitig erreichen und selbst bei vernachlässigbarer Absorption kann die Summe aus Reflexionsgrad und Transmissionsgrad nicht größer als 100% sein. Allerdings haben die gegenwärtigen Erfinder gefunden, dass sich diese physikalische Beschränkung praktisch dadurch umgehen lässt, dass der Reflexionsgrad und der Transmissionsgrad bei unterschiedlichen Wellenlängen jeweils maximiert werden. Es ist beispielsweise sehr wohl möglich, dass eine Beschichtung im gelben Spektralbereich eine Reflexion von 75% (oder allgemein von > 50%) und im komplementären Blauen eine Transmission von 75% (oder allgemein von > 50%) aufweist. Dies stelle keine Verletzung der oben genannten Beziehung dar, da für jede Wellenlänge dennoch die Beziehung R+T+A = 1 erfüllt ist.

Zweckmäßig weist die erste reflexionserhöhende Beschichtung zumindest in einem Teilbereich des sichtbaren Spektralbereichs eine Transmission von mindestens 35%, vorzugsweise von mindestens 50% besonders bevorzugt von mindestens 60% auf. Weiter weist die erste reflexionserhöhende Beschichtung zumindest in einem Teilbereich des sichtbaren Spektralbereichs eine Reflexion von mindestens 30%, bevorzugt von mindestens 50% und besonders bevorzugt von 70% oder mehr auf. Wie erläutert, sind die Teilbereiche besonders hoher Transmission und besonders hoher Reflexion in Rahmen der Erfindung verschieden, so dass Transmission und Reflexion in diesen Bereichen gleichzeitig besonders hohe Werte, insbesondere Werte von mehr als 50% annehmen können.

Die erste reflexionserhöhende Beschichtung enthält vorteilhaft eine oder mehrere hochbrechende Schichten, bevorzugt dielektrische hochbrechende Schichten, die zumindest in einem Teilbereich des sichtbaren Spektrums einen Brechungsindex von mindestens 1,7, bevorzugt mindestens 2,0 und besonders bevorzugt mindestens 2,2 aufweisen. Beispielsweise können dielektrische hochbrechende Schichten aus $TiO_2$ oder ZnS eingesetzt werden. Bereits eine einzelne dielektrische hochbrechende Schicht kann mit einer Dicke vorgesehen werden, so dass sie wellenlängenabhängig reflektiert. Beispielsweise reflektiert eine 70-150nm dicke ZnS (oder TiO2)-Schicht farbig, eine 40 nm dicke Schicht dagegen weiß. Diese können auch mit niedrigbrechenden Schichten, beispielsweise aus MgF oder $SiO_2$, kombiniert werden, um vorteilhafte Mehrfachschichtsystem zu schaffen. Neben hochbrechenden Dielektrika können auch Halbleitermaterialien, wie etwa Silizium, als hochbrechende Schichten verwendet werden. Auch wenn diese eine höhere Absorption als hochbrechende Dielektrika aufweisen, lassen sich mit dünnen Halbleiterschichten vergleichbare Effekte erzeugen.

Es hat sich herausgestellt, dass sich eine gleichzeitige sehr hohe Reflexion und sehr hohe Transmission bei unterschiedlichen Wellenlängen besonders gut mit Mehrfachschichten verwirklichen lassen, insbesondere mit Mehrfachschichtsystemen mit mehreren dielektrischen Schichten. Vorteilhaft sind beispielsweise Dreischichtsysteme, die zwei hochbrechende Schichten und eine niedrigbrechende Zwischenschicht enthalten, wie etwa ein Schichtsystem aus einer 125 nm dicken $TiO_2$-Schicht, einer 70 nm dicken $SiO_2$-Zwischenschicht und einer weiteren 125 nm dicken $TiO_2$-Schicht.

Die erste reflexionserhöhende Beschichtung kann eine (rein) dielektrische, reflexionserhöhende Beschichtung sein. Weiter bevorzugt wirkt die erste dielektrische, reflexionserhöhende Beschichtung brechungsindexbasiert. Sie ist wellenlängenabhängig semitransparent, obwohl sie aus transparentem Material mit entsprechendem Brechungsindex gebildet sein kann. Besonders bevorzugt ist die erste dielektrische, brechungsindexbasiert reflexionserhöhende Beschichtung in dem Sicherheitselement für Licht in Transmission richtungsneutral. Die Richtung des eintreffenden Lichts und die Richtung des durch die erste reflexionserhöhende Beschichtung transmittierten Lichts sind somit gleich.

Besonders bevorzugt ist die Reflexions- und die Transmissions-Farbwirkung der ersten reflexionserhöhenden Beschichtung unabhängig vom Betrachtungswinkel.

Auch dünne Metallschichten können allein oder in einem Mehrfachschichtsystem mit Vorteil eingesetzt werden. Vorzugsweise wird ein Mehrfachschichtsystem als erste reflexionserhöhende Beschichtung eingesetzt, welches (im Wesentlichen) betrachtungswinkelunabhängig eine erste Farbe in Reflexion und eine zweite Farbe in Transmission zeigt. Beispielsweise kann eine erste reflexionserhöhende Beschichtung durch ein Dreifachschichtsystem aus 25 nm Ag / 225 nm $SiO_2$ / 25 nm Ag gebildet sein, welches eine goldene Farbe in Reflexion und eine blaue Farbe in Transmission zeigt, jeweils mit einem hohen Reflexions- bzw. Transmissionsgrad von mehr als 50%. Schichtsysteme mit einer Abfolge Metall / Dielektrikum/Metall lassen sich in der Praxis oft einfacher oder kostengünstiger auf bestehenden Anlagen herzustellen als dielektrische Mehrfachschichtsysteme, sie weisen wegen der (zwar) geringen (aber doch nennenswerten) Absorption der dünnen Metallschichten allerdings eine gegenüber rein dielektrischen Schichtsystemen reduzierte maximale Helligkeit auf.

Die erste reflexionserhöhende Beschichtung kann auch durch eine Flüssigkristallschicht gebildet sein, welche vorzugsweise durch die höher liegende Reliefstruktur orientiert ist. Auch semitransparente nanostrukturierte Metallschichten, bei denen beispielsweise Strukturfarben durch zusätzliche Subwellenlängenstrukturen in der höher liegenden Reliefstruktur erzeugt werden, kommen in Betracht.

Die zweckmäßigen Schichtdicken der ersten reflexionserhöhenden Beschichtung und der beteiligten Teilschichten liegen bei all diesen Gestaltungen zwischen etwa zehn und mehreren Hundert Nanometern. Dünne Metallschichten können auch mit Dicken von weniger als 10 nm vorgesehen sein.

Besonders vorteilhaft ist vorliegend, dass die erste reflexionserhöhende Beschichtung vollflächig aufgebracht werden kann, da die darunter liegende tiefer liegende Reliefstruktur wegen der Semitransparenz der Beschichtung durch diese hindurch sichtbar bleibt, wie weiter unten genauer erläutert.

Die zweite reflexionserhöhende Beschichtung weist erfindungsgemäß einen möglichst hohen Reflexionsgrad auf, der vorteilhaft mindestens 50%, bevorzugt mindestens 75%, besonders bevorzugt mindestens 80% oder sogar mindestens 85% beträgt. Dieser hohe Reflexionsgrad liegt zumindest in einem Teil des sichtbaren Spektrums vor und zwar vorteilhaft in dem Farbbereich, in dem die Farbe des zweiten optisch variablen Effekts gewünscht ist. Die zweite reflexionserhöhende Beschichtung kann aber vorteilhaft auch im gesamten sichtbaren Spektralbereich hochreflektierend ausgebildet sein, da eine gewünschte Farbwirkung bereits durch eine farbige Transmission der ersten reflexionserhöhenden Beschichtung und/ oder eine zwischenliegende Farbschicht und/oder eine eingefärbten Prägelackschicht erzeugt werden kann.

Bevorzugt ist die zweite reflexionserhöhende Schicht als reflektierende metallische Beschichtung ausgebildet. Die Reflexion kann insbesondere so hoch sein, dass die zweite reflexionserhöhende Schicht in Transmission opak ist, also eine optische Dichte von mindestens 1,0, bevorzugt 2,0 oder mehr aufweist. Als im gesamten sichtbaren Spektralbereich hochreflektierende Schichten kommen beispielsweise Schichten aus Silber und Aluminium in Betracht. In anderen vorteilhaften Ausführungen werden farbige Metallisierungen, insbesondere eine goldfarbene Metallisierung (beispielsweise aus Au oder Legierungen wie Al-Cu und dergleichen) oder eine kupferfarbene Metallisierung verwendet. Um eine gewünschte Farbwirkung zu erzielen, kann die zweite reflexionserhöhende Schicht auch aus einer Kombination einer Metallisierung und einer lasierenden Farbschicht bestehen. Auch Dünnschichtsysteme kommen als zweite reflexionserhöhende Schicht in Betracht, beispielsweise farbkippende Dreischichtaufbauten aus Absorber, Dielektrikum und Reflektorschicht, mit denen sich insbesondere auch blaue oder grüne reflektive Farbbeiträge realisieren lassen, die mit einzelnen Metallschichten schwer zu realisieren sind.

Die erste und zweite reflexionserhöhende Schicht sind vorzugsweise aufeinander abgestimmt, um insgesamt eine hohe Reflexion des Sicherheitselements von beiden Reliefstrukturen und damit eine helle Darstellung beider optisch variabler Effekt zu erhalten. Insbesondere ist daher vorteilhaft die Reflexion der zweiten reflexionserhöhenden Schicht jedenfalls in dem Spektralbereich hoch, in dem die erste reflexionserhöhende Schicht eine hohe Transmission aufweist, da sich die Helligkeit des optisch variablen Effekts der tiefer liegenden Reliefstruktur aus der Transmission der ersten reflexionserhöhenden Schicht und der Reflexion der zweiten reflexionserhöhenden Schicht ergibt.

Hat beispielsweise die erste reflexionserhöhende Schicht im Grünen einen Reflexionsgrad $R_{Grün}(1) = 75\%$ und im Roten einen Transmissionsgrad von $T_{Rot}(1) = 90\%$, und hat die zweite reflexionserhöhende Schicht zumindest im Roten (oder im gesamten sichtbaren Spektralbereich) einen Reflexionsgrad von $R_{Rot}(2) = 90\%$, so ergibt sich bei Vernachlässigbarkeit der Absorptionen und der Abwesenheit weiterer Farbschichten der Reflexionsgrad $R_H$ der höher liegenden Reliefstruktur im Grünen zu

$$R_{HL,\,Grün} = R_{Grün}(1) = 75\%,$$

und der Reflexionsgrad $R_T$ der höher liegenden Reliefstruktur im Roten zu

$$R_{TL,\,Rot} = T_{Rot}(1) * R_{Rot}(2) * T_{Rot}(1) = 73\%,$$

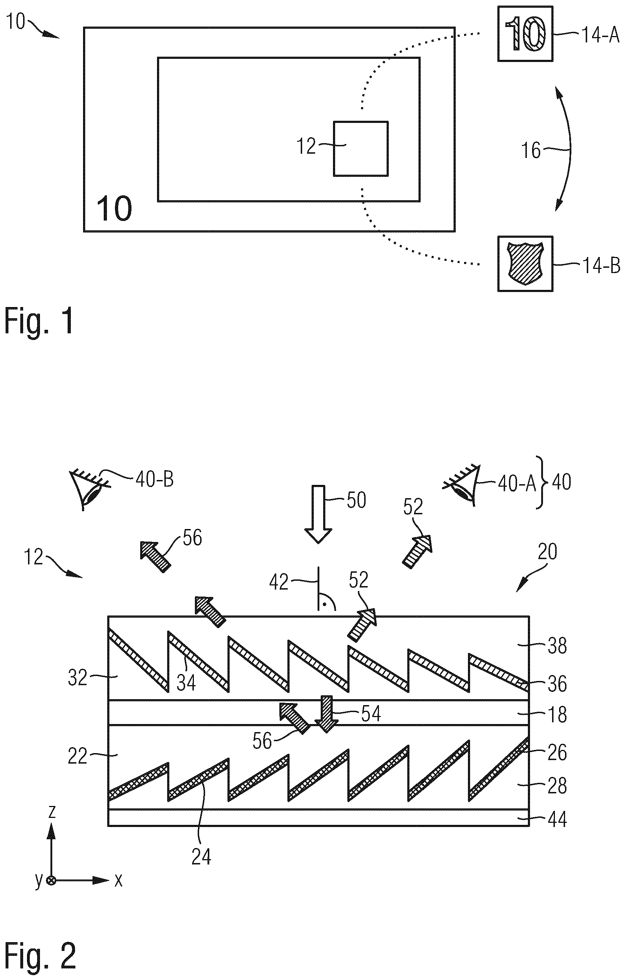

so dass beide optisch variable Effekte mit sehr hoher und mit miteinander vergleichbarer Helligkeit in Erscheinung treten. Bei der Bestimmung der Helligkeit des optisch variablen Effekts der tiefer liegenden Reliefstruktur ist zu berücksichtigen, dass das von der zweiten reflexionserhöhenden Schicht reflektierte Licht ein weiteres Mal durch die erste reflexionserhöhende Schicht hindurchläuft (siehe etwa Fig. 2), so dass deren Transmissionsgrad zweimal berücksichtigt werden muss.

Im genannten Beispiel gilt bei Vernachlässigung der Absorption für die erste reflexionserhöhende Schicht weiter für den Transmissionsgrad im Grünen $T_{Grün}(1) = 25\%$ und für den Reflexionsgrad im Roten $R_{Rot}(1) = 10\%$, so dass bei derselben Wellenlänge

$$R_{Grün}(1) + T_{Grün}(1) = 75\% + 25\% = 100\%,$$

und

$$R_{Rot}(1) + T_{Rot}(1) = 90\% + 10\% = 100\%,$$

gilt, die Energieerhaltung also erfüllt ist. Dennoch gilt für die Reflexion und Transmission der ersten reflexionserhöhenden Schicht bei verschiedenen Wellenlängen

$$R_{Grün}(1) + T_{Rot}(1) = 75\% + 90\% > 100\%,$$

was für beide Reliefstrukturen eine hohe Reflektivität mit

$$R_{HL,\,Grün} + R_{TL,\,Rot} = 75\% + 73\% > 100\%$$

ermöglicht.

Mit Vorteil ist durch die Abstimmung der ersten und zweiten reflexionserhöhenden Schicht vorgesehen, dass das Sicherheitselement zumindest in einem Teilbereich Licht eines ersten Wellenlängenbereichs des sichtbaren Spektrums mit einem Reflexionsgrad R1 in einen ersten Betrachtungswinkelbereich und Licht eines zweiten Wellenlängenbereichs des sichtbaren Spektrums mit einem Reflexionsgrad R2 in einen zweiten Betrachtungswinkelbereich lenkt, wobei gilt R1+R2 > 1 (oder 100%). Im obigen Beispiel ist der erste Wellenlängenbereich der grüne Spektralbereich, der zweite Wellenlängenbereich der rote Spektralbereich und R1=0,75, R2=0,73, so dass R1+R2=1,48>1 gilt.

Mit Vorteil ändert das durch die erste reflexionserhöhende Schicht transmittierte Licht seine Richtung nicht oder nur wenig, um sicherzustellen, dass der optisch variable Effekt der höher liegenden Reliefstruktur nicht auf die tiefer liegende Reliefstruktur durchscheint. Um dies zu erreichen, weisen die reliefbildenden Schichten und die an die reflexionserhöhenden Schichten anschließenden Schichten einen ähnlichen oder sogar gleichen Brechungsindex auf, also einen Brechungsindexunterschied von weniger als 0,25, bevorzugt weniger als 0,1 und besonders bevorzugt von weniger als 0,05.

Zwischen der ersten und zweiten Reliefstruktur können eine oder mehrere lichtdurchlässige Farbschichten vorgesehen sein, um den Farbeindruck des optisch variablen Effekts der zweiten Reliefstruktur zu beeinflussen. Eine solche lichtdurchlässige Farbschicht kann insbesondere nicht höhenstrukturiert, also als Flachschicht ausbildet sein, oder sie kann durch eine eingefärbte reliefbildende Schicht, beispielsweise eine gefärbte Prägelackschicht gebildet sein.

Die unterschiedlichen Höhenstufen, in denen die beiden Reliefstrukturen angeordnet sind, weisen in z-Richtung vorteilhaft einen Abstand zwischen 5 µm und 100 µm, vorzugsweise zwischen 10 µm und 50 µm auf. Der geringe vertikale Abstand der beteiligten Strukturen ist bei der Betrachtung des Sicherheitselements nicht wahrnehmbar. Auf der anderen Seite ist der vertikale Abstand groß genug um keine Interferenzeffekte in der oder den Zwischenschichten auftreten zu lassen, so dass die Farbgebung des Sicherheitselements nicht durch eventuelle Interferenzfarben gestört ist. Interferenzeffekte werden auch durch die nicht konform verlaufenden Höhenprofile der Reliefstrukturen verhindert, die zusätzlich zu einem sich lokal ständig verändernden vertikalen Abstand der Reliefstrukturen führt. Den Bezugspunkt für die Höhenstufe einer Reliefstruktur bildet dabei die Grundfläche der Reliefstruktur, beispielsweise am Fußpunkt einer Mikrospiegelprägung.

In manchen Ausgestaltungen kann zweckmäßig auch oberhalb der ersten reflexionserhöhenden Schicht eine lichtdurchlässige Farbschicht vorgesehen sein, um den Farbeindruck des optisch variablen Effekts der ersten Reliefstruktur zu beeinflussen. Beispielsweise kann eine hochbrechende Dielektrikumsschicht mit einer lasierenden Buntfarbe überdeckt werden. Da eine solche Farbschicht auch die Farbe und Helligkeit des optisch variablen Effekts der zweiten Reliefstruktur beeinflusst, werden für solche Farbschichten bevorzugt helle Farben verwendet, die auch die gewünschte Farbe der zweiten Reliefstruktur möglichst stark transmittieren, wie beispielsweise Gelb oder ein jeweils sehr helles Rot, Blau oder Grün.

Bezüglich der Flächendeckung der reflexionserhöhenden Schichten sind in einer vorteilhaften Ausgestaltung beide reflexionserhöhenden Schichten ungerastert und insbesondere sogar vollflächig auf das Flächenmuster aufgebracht. Ein besonderer Vorteil der erfindungsgemäßen Gestaltung besteht gerade darin, dass trotz einer ungerastert oder vollflächig vorliegenden ersten reflexionserhöhenden Beschichtung der optisch variable Effekt der tiefer liegenden Reliefstruktur sichtbar ist.

In einer Weiterbildung kann die zweite reflexionserhöhende Schicht auch nur bereichsweise vorgesehen sein und dadurch Negativkennzeichen, insbesondere in Form von Zahlen, Symbolen und dergleichen, in dem Sicherheitselement bilden. Zusätzlich oder alternativ kann auch die erste reflexionserhöhende Beschichtung nur bereichsweise vorliegen. Erfindungsgemäß müssen die Bereiche, in denen die beiden verschiedenen reflexionserhöhenden Beschichtungen vorgesehen sind, aber zumindest bereichsweise in dem Merkmalsbereich überlappen. In vorteilhaften Ausführungen sind die beiden reflexionserhöhenden Beschichtungen zwar nicht vollflächig, aber in ganz oder nahezu deckungsgleichen Teilbereichen vorgesehen. Insbesondere kann ein Negativkennzeichen so ausgeführt sein, dass beide reflexionserhöhende Beschichtungen deckungsgleich in Form von Text, Symbolen, Wertzahlen und dergleichen ausgespart werden. Die erste reflexionserhöhende Schicht liegt daher im Merkmalsbereich vorteilhaft ungerastert, also ohne Rasterung, aber gegebenenfalls mit einzelnen Negativkennzeichen vor. In einer bevorzugten Ausgestaltung liegt die erste reflexionserhöhende Schicht im Merkmalsbereich sogar vollflächig, also ohne Rasterung und Aussparungen vor.

Für eine besonders gute Passerung der beiden Schichten können bekannte Strukturierungsverfahren benutzt werden, bei denen beispielsweise eine bereits strukturierte reflexionserhöhende Beschichtung als Maske für die Strukturierung der anderen Schicht verwendet wird.

Insbesondere bei Einsatz einer dielektrischen ersten reflexionserhöhenden Schicht kann es vorteilhaft sein, den Reflexionsgrad bzw. die Farbwirkung bereichsweise zu unterdrücken und so beispielsweise eine Aussparung der Schicht zu imitieren. Dazu können in der höher liegenden Reliefstruktur entsprechende Modulationsstrukturen vorgesehen sein, die den Reflexionsgrad bzw. die Farbwirkung der aufgebrachten Schicht lokal verringern. Hierzu können vorteilhaft sogenannte Mottenaugenstrukturen verwendet werden, die beispielsweise als regelmäßige oder unregelmäßige Subwellenlängenstrukturen vorliegen können.

Nur der Vollständigkeit halber sei erwähnt, dass die näher zum Betrachter liegende Reliefstruktur die höher liegende Reliefstruktur ist. Die beiden optisch variablen Effekte zeigen sich dem Betrachter von einer Betrachtungsseite (in diesem Sinne von oben).

Die Erfindung enthält weiter einen in Anspruch 14 definierten Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln. Die tiefer liegende Reliefstruktur liegt dabei in der Regel näher an einer Oberfläche des Datenträgers als die höher liegende Reliefstruktur, welche näher am Auge des Betrachters liegt. Das Sicherheitselement ist in einer zweckmäßigen Variante in einem opaken Bereich des Datenträgers angeordnet.

Die Erfindung enthält auch ein in Anspruch 15 definiertes Verfahren zum Herstellen eines optisch variablen Sicherheitselements.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1    eine schematische Darstellung einer Banknote mit einem erfindungsgemäßen optisch variablen Sicherheitselement,

Fig. 2    einen Ausschnitt eines erfindungsgemäßen Sicherheitselements im Querschnitt,

Fig. 3    den Transmissionsgrad und den Reflexionsgrad der ersten reflexionserhöhenden Beschichtung der Fig. 2,

Fig. 4    ein anderes Ausführungsbeispiel der Erfindung, bei dem die im Zusammenhang mit Fig. 2 beschriebenen Schichten auf derselben Seite einer Trägerfolie aufgebracht wurden,

Fig. 5    in (a) bis (e) schematisch das Erscheinungsbild des Sicherheitselements der Fig. 4 in Aufsicht aus verschiedenen Betrachtungsrichtungen, und

Fig. 6    ein weiteres Ausführungsbeispiel der Erfindung.

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12 in Form eines aufgeklebten Transferelements. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patches oder Streifen jeweils mit oder ohne eigene Trägerschicht) beispielsweise auch Sicherheitsfäden oder Sicherheitsstreifen in Betracht.

Das in Fig. 1 gezeigte Sicherheitselement 12 vermittelt dem Betrachter trotz seiner flachen Ausbildung einen dreidimensionalen Eindruck und zeigt zugleich einen binären Farb- und Effektwechsel beim Kippen der Banknote 10. Dabei zeigt das Sicherheitselement 12 aus einer ersten Betrachtungsrichtung ein erstes, sich scheinbar aus der Ebene der Banknote 10 herauswölbendes Motiv 14-A, konkret beispielsweise eine gewölbte Darstellung der Wertzahl "10", die mit einer ersten Farbe, beispielsweise einem leuchtenden Gelb, erscheint. Aus einer zweiten Betrachtungsrichtung zeigt das Sicherheitselement 12 ein zweites, sich scheinbar aus der Ebene der Banknote 10 herauswölbendes Motiv 14-B, beispielsweise eine gewölbte Darstellung eines Wappens, das mit einer zweiten Farbe, beispielsweise einem leuchtenden Blau, erscheint.

Bei Kippen 16 der Banknote 10 oder einer entsprechenden Änderung der Betrachtungsrichtung springt das Erscheinungsbild des Sicherheitselements 12 plötzlich von dem ersten zum zweiten Erscheinungsbild bzw. beim Zurückkippen vom zweiten zum ersten Erscheinungsbild. Die Änderung des Motivs (Wertzahl bzw. Wappen) und der Farbe (Gelb bzw. Blau) erfolgt dabei gleichzeitig und ohne eine Zwischen- oder Übergangsstufe, in der beide Motive bzw. Farben gleichzeitig sichtbar wären oder ein Motiv in der Farbe des anderen Motivs sichtbar wäre. Das Erscheinungsbild springt daher übergangslos zwischen zwei Erscheinungsbildern 14-A, 14-B und wird daher als binärer Farb- und Effektwechsel bezeichnet.

Sicherheitselemente mit solchen Erscheinungsbildern sind grundsätzlich bereits aus der Druckschrift DE 10 2018 005 447 A1 bekannt. Gegenüber den dort beschriebenen Sicherheitselementen ist das vorliegend beschriebene Sicherheitselement allerdings einfacher und kostengünstiger herstellbar und zeigt zudem die beiden optischen Effekte mit höherer Leuchtstärke und damit auch mit höherem Aufmerksamkeits- und Wiedererkennungswert.

Der besondere Aufbau erfindungsgemäßer optisch variabler Sicherheitselemente wird nun mit Bezug auf Fig. 2 näher erläutert, die einen Ausschnitt des Sicherheitselements 12 schematisch im Querschnitt zeigt.

Das Sicherheitselement 12 enthält eine flächige, transparente Trägerfolie 18, deren Flächenausdehnung eine x-y-Ebene und eine darauf senkrecht stehende z-Achse definiert.

Die Trägerfolie 18 trägt einen mehrfarbigen reflektiven Flächenbereich 20, der zwei Reliefstrukturbereiche 24, 34 enthält, die in z-Richtung in zwei bestimmten, unterschiedlichen Höhenstufen angeordnet sind. Da das Sicherheitselement der Fig. 2 auf eine Betrachtung in Reflexion aus der positiven z-Richtung ausgelegt ist, wird die näher am Betrachter 40 liegende Reliefstruktur 34 als die höher liegende Reliefstruktur und die weiter vom Betrachter 40 entfernt liegende Reliefstruktur 24 als die tiefer liegende Reliefstruktur bezeichnet.

Die beiden Reliefstrukturbereiche stellen im Ausführungsbeispiel jeweils Mikrospiegelprägungen bzw. Mikrospiegelanordnungen 24, 34 dar, welche jeweils aus einer Vielzahl von gegen die x-y-Ebene geneigten Mikrospiegeln mit lateralen Abmessungen von etwa 10 μm gebildet sind. Die lokalen Neigungswinkel der Mikrospiegel sind dabei gerade so gewählt, dass die Reliefstrukturen der Mikrospiegelanordnungen 24, 34 nach der reflexionserhöhenden Beschichtung ein gewünschtes optisches Erscheinungsbild erzeugen.

Konkret sind die Neigungswinkel der Mikrospiegel im Ausführungsbeispiel so gewählt, dass die Mikrospiegelanordnung 34 in einem auf die Flächennormale 42 bezogenen Betrachtungswinkelbereich von +5° bis +20° (Betrachtungsposition 40-A) die gewölbte Darstellung der Wertzahl "10" erzeugt und die Mikrospiegelanordnung 24 in einem Betrachtungswinkelbereich von -5° bis -20° (Betrachtungsposition 40-B) die gewölbte Darstellung des Wappens erzeugt.

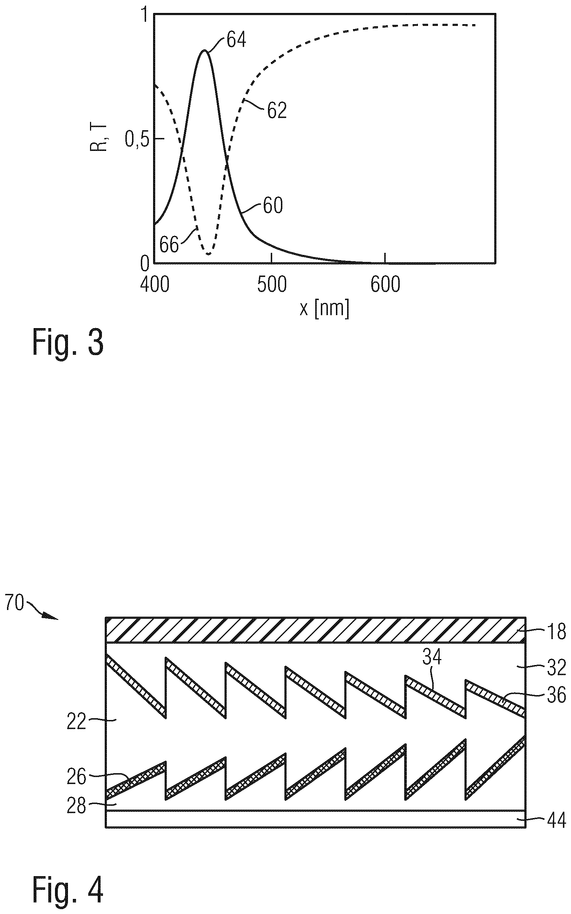

Zur Erzeugung der gewünschten Farbeindrücke ist die tiefer liegende Mikrospiegelanordnung 24 vollflächig mit einer dem Reliefverlauf folgenden zweiten reflexionserhöhenden Beschichtung 26 in Form einer hochreflektierenden opaken Metallschicht versehen, beispielsweise mit einer opaken Aluminiumschicht einer Reflektivität von etwa 90%. Die höher liegende Mikrospiegelanordnung 34 ist vollflächig mit einer dem Reliefverlauf folgenden ersten reflexionserhöhenden Beschichtung 36 versehen, die semitransparent und mit einer im sichtbaren Spektralbereich wellenlängenabhängigen Reflexion und Transmission ausgebildet ist, wie in Fig. 3 genauer illustriert.

Figur 3 zeigt schematisch den Transmissionsgrad (durchgezogene Kurve 60) und den Reflexionsgrad (gestrichelte Kurve 62) der reflexionserhöhenden Beschichtung 36 in Abhängigkeit von der Wellenlänge λ. Wie aus Fig. 3 ersichtlich ist der Transmissionsgrad der Beschichtung 36 im blauen Spektralbereich besonders hoch (Peak 64) und übersteigt dort sogar die 50%-Marke. Entsprechend ist der Reflexionsgrad der Beschichtung 36 im blauen Spektralbereich sehr niedrig (Dip 66). Umgekehrt ist der Reflexionsgrad der Beschichtung 36 im gelben und roten Spektralbereich besonders hoch und übersteigt dort ebenfalls deutlich die 50%-Marke, wobei wiederum entsprechend der Transmissionsgrad der Beschichtung in diesem Spektralbereich sehr niedrig ist.

Wie weiter oben genauer erläutert, ist es durch die spektrale Trennung von Reflexion und Transmission möglich, dass die reflexionserhöhende Beschichtung 36 einerseits im gelben Spektralbereich einen Reflexionsgrad von mehr als 50% aufweist und daher eine helle, goldgelbe Reflexionsfarbe erzeugt, und andererseits außerhalb des gelben Spektralbereichs einen Transmissionsgrad von mehr als 50% aufweist und daher eine helle, blaue Transmissionsfarbe aufweist.

Die Mikrospiegelanordnungen 24, 34 sind jeweils in eine auf der Trägerfolie 18 aufgebrachte transparente Prägelackschicht 22, 32 eingeprägt und nach dem Aufbringen der jeweiligen reflexionserhöhenden Beschichtung 26, 36 mit einer transparenten Decklackschicht 28 bzw. 38 eingeebnet. Die Decklackschichten weisen dabei vorzugsweise im Wesentlichen denselben Brechungsindex wie die Prägelackschichten 22, 32 auf. Der Schichtaufbau ist beispielsweise mit Hilfe einer Klebeschicht 44 auf dem Banknotenpapier der Banknote 10 oder dem Substrat eines anderen Datenträgers aufgebracht.

Bei senkrecht einfallendem weißem Licht 50 stehen für den Betrachter aus der Betrachtungsrichtung 40-A die Mikrospiegel der höher liegenden Mikrospiegelanordnung 34 im Glanzwinkel, welche die gewölbte Darstellung der Wertzahl "10" erzeugen, wobei die erste reflexionserhöhende Beschichtung 36 dem Bildeindruck eine helle, goldgelbe Reflexionsfarbe 52 verleiht. Wegen der Semitransparenz der reflexionserhöhenden Beschichtung 36 sind die Mikrospiegel der Mikrospiegelanordnung 24 zwar grundsätzlich ebenfalls wahrnehmbar, ihre Ausrichtung ist allerdings weit vom Glanzwinkel entfernt und sie erscheinen daher aus der Betrachtungsrichtung 40-A unauffällig und tragen zum Bildeindruck praktisch nicht bei. Insgesamt zeigt sich dem Betrachter aus Betrachtungsrichtung 40-A somit das von der Mikrospiegelanordnung 34 erzeugte, goldgelb leuchtende Erscheinungsbild 14-A der gewölbten Wertzahl "10".

Aus der Betrachtungsrichtung 40-B stehen für den Betrachter die Mikrospiegel der tiefer liegenden Mikrospiegelanordnung 24 im Glanzwinkel, welche die gewölbte Darstellung des Wappens erzeugen. Von dem einfallenden weißen Licht 50 transmittiert die semitransparente Beschichtung 36 den blauen Anteil als blaue Transmissionsfarbe 54. Die blaue Transmissionsfarbe 54 wird von der im Wesentlichen als Spiegel wirkenden opaken Aluminiumbeschichtung 26 farblich unverändert als blaue Reflexion 56 in die Betrachtungsrichtung 40-B reflektiert. Die Mikrospiegel der höher liegenden Mikrospiegelanordnung 34 sind zwar grundsätzlich ebenfalls wahrnehmbar, ihre Ausrichtung ist allerdings weit vom Glanzwinkel entfernt und sie erscheinen daher aus der Betrachtungsrichtung 40-B unauffällig und tragen zum Bildeindruck praktisch nicht bei. Insgesamt zeigt sich dem Betrachter aus Betrachtungsrichtung 40-B somit das von der Mikrospiegelanordnung 24 erzeugte, blau leuchtende Erscheinungsbild 14-B des gewölbten Wappens.

Sowohl das gelb leuchtende Erscheinungsbild der gewölbten Wertzahl "10" als auch das blau leuchtende Erscheinungsbild 14-B des gewölbten Wappens weisen dabei eine Intensität von mehr als 50% der einfallenden Lichtintensität auf, so dass beide Farbeindrücke für den Betrachter außerordentlich leuchtkräftig und auffällig erscheinen.

Bei herkömmlichen Gestaltungen, bei denen die tiefer liegende Reliefstruktur nur durch eine gerasterte Farbbeschichtung der höher liegenden Reliefstruktur hindurch sichtbar ist, begrenzt die Flächendeckung des Rasters die relative Helligkeit der beiden Reliefstrukturen, so dass allenfalls eine der Helligkeiten der beiden Erscheinungsbilder oberhalb von 50% liegen kann. Wie weiter oben bereits im Detail erläutert, wird die erhöhte Helligkeit bei der vorliegenden Erfindung dadurch ermöglicht, dass die Wellenlängenbereiche maximaler Reflexion und maximaler Transmission spektral getrennt werden. Während es physikalisch unmöglich ist, dass der Reflexionsgrad und der Transmissionsgrad bei derselben Wellenlänge gleichzeitig größer als 50% ist, kann bei einer spektralen Trennung die Reflexion in einer Farbe (hier beispielsweise Gelb) und die Transmission in einer anderen Farbe (hier beispielsweise Blau) jeweils größer als 50% sein. Wird das transmittierte Licht dann durch eine hochreflektive Schicht fast verlustfrei reflektiert, kann das Sicherheitselement insgesamt sowohl den ersten optisch variablen Effekt in der ersten Farbe (Gelb) als auch den zweiten optisch variablen Effekt in der zweiten Farbe (Blau) mit einem Reflexionsgrad von mehr als 50% darstellen.

Es ist erfindungsgemäß allerdings nicht zwingend erforderlich, dass sowohl Reflexion als auch Transmission oberhalb von 50% liegen, da einerseits auch mit kleineren Werten bereits eine höhere Helligkeit als bei herkömmlichen Gestaltungen erzielt werden kann, und da andererseits durch die Semitransparenz der ersten reflexionserhöhenden Beschichtung unabhängig von der Helligkeit auf jeden Fall die Notwendigkeit einer feinen Rasterung der Beschichtung der höher liegenden Reliefstruktur entfällt und das Sicherheitselement daher einfacher und kostengünstiger hergestellt werden kann.

Konkret kann für die semitransparente reflexionserhöhende Beschichtung 36 der höher liegenden Reliefstruktur beispielsweise eine Einzelschicht aus $TiO_2$ oder ZnS mit einer Schichtdicke von etwa 10 nm bis zu einigen 100 nm eingesetzt werden. Beispielsweise erhält man bei einer 125 nm dicken hochbrechenden Beschichtung aus $TiO_2$ bei Verwendung eines Brechungsindex von 1,41 für den umgebenden Präge- bzw. Schutzlack eine Reflektivität von über 40% im grünen Bereich und gleichzeitig eine sehr hohe Transmission im blauen und roten Bereich, die bei 90% oder mehr liegen kann.

Besonders gut eignen sich Mehrfachschichten für die semitransparente reflexionserhöhende Beschichtung 36, da diese gezielt auf gleichzeitig sehr hohe Reflexion und sehr hohe Transmission bei unterschiedlichen Wellenlängen ausgelegt werden können. Beispielsweise können dielektrischen Dreifachschichten eingesetzt werden, etwa ein Sandwich aus zwei 125 nm dicken $TiO_2$-Schichten, die durch eine 70 nm dicke $SiO_2$-Zwischenschicht getrennt sind. Eine solche Beschichtung weist fast 80% Reflexion bei Wellenlängen um 500 nm bei weiterhin sehr hoher Transmission von mehr als 90% insbesondere im roten Spektralbereich auf.

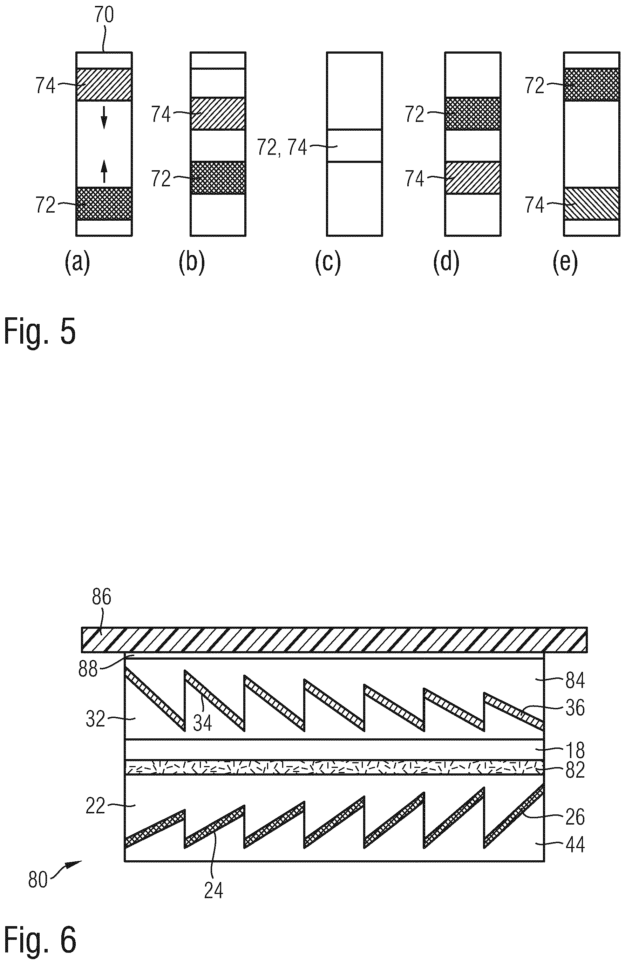

Zurückkommend auf die Darstellung der Fig. 2 kann der Farbeindruck der zweiten Reliefstruktur 24 und damit des zweiten optisch variablen Effekts auf mehrere Weisen modifiziert werden. Beispielsweise kann anstelle einer Aluminiumbeschichtung ein farbig reflektierendes Metall, wie etwa Kupfer oder Gold für die zweite reflexionserhöhende Beschichtung verwendet werden. Alternativ oder zusätzlich kann eine lichtdurchlässige Farbschicht zwischen den beiden reflexionserhöhenden Beschichtungen 26 und 36 angeordnet werden wie in Fig. 6 illustriert. Eine solche lichtdurchlässige Farbschicht kann insbesondere nicht höhenstrukturiert ausbildet sein und beispielsweise als Flachschicht auf die obere oder untere Oberfläche der Trägerfolie 18 aufgebracht sein. Weiter alternativ oder zusätzlich können auch einer oder beide der Prägelacke 22, 32 eingefärbt sein.

Durch diese Maßnahmen wird die Reflexionsfarbe der ersten Reliefstruktur 34 nicht verändert. Der Farbeindruck der zweiten Reliefstruktur 24 wird allerdings modifiziert und ergibt sich dann durch eine Kombination der Transmissionsfarbe der ersten reflexionserhöhenden Beschichtung, der Reflexionsfarbe der zweiten reflexionserhöhenden Beschichtung und gegebenenfalls weiterer Farbwirkungen von zwischen den Reliefstrukturen liegenden Farbschichten und/ oder von eingefärbten Prägelacken.

Figur 4 zeigt als weiteres Ausführungsbeispiel der Erfindung ein Sicherheitselement 70, bei dem die im Zusammenhang mit Fig. 2 beschriebenen Schichten auf derselben Seite einer Trägerfolie 18 aufgebracht wurden. Ausgehend von der Trägerfolie 18 enthält das Sicherheitselement 70 eine erste transparente Prägelackschicht 32 mit einer eingeprägten, höher liegenden Mikrospiegelstruktur 34, eine erste reflexionserhöhende Beschichtung 36, eine auf der Beschichtung 36 aufgebrachte zweite transparente Prägelackschicht 22 mit einer eingeprägten, tiefer liegenden Mikrospiegelstruktur 24, eine zweite reflexionserhöhende Beschichtung 26, eine Decklackschicht 28 und schließlich eine Kleberschicht 44 zum Übertragen des Sicherheitselements 70 auf ein Zielsubstrat. Die Trägerfolie 18 ist vorzugsweise releasefähig ausgebildet und wird nach der Übertragung des Sicherheitselements 70 abgezogen. Alternativ kann die Trägerfolie 18 bei einer transparenten Ausbildung auch im übertragenen Schichtverbund verbleiben.

Die erste reflexionserhöhende Beschichtung 36 ist im Ausführungsbeispiel der Fig. 4 durch einen dielektrischen Dreischichtaufbau aus einer 125 nm dicken $TiO_2$-Schicht, einer 70 nm dicken $SiO_2$-Schicht und einer 125 nm dicken $TiO_2$-Schicht gebildet. Die Beschichtung 36 zeigt eine grüne Reflexionsfarbe mit einer Reflektivität von fast 80% und eine rote Transmissionsfarbe mit einem Transmissionsgrad von deutlich über 80%. Als zweite reflexionserhöhende Beschichtung 26 ist eine hochreflektive Aluminiumbeschichtung eingesetzt, die im Wesentlichen als Spiegelfläche ohne eigenen Farbbeitrag wirkt. Das Sicherheitselement 70 zeigt die nachfolgend beschriebenen optisch variablen Effekte aus den jeweiligen Betrachtungsrichtungen daher mit leuchtend grüner bzw. leuchtend roter Farbe.

Bemerkenswert ist dabei insbesondere, dass die Summe des Reflexionsgrads R1 der höher liegenden Reliefstruktur 34 im Grünen und des Reflexionsgrads R2 der tiefer liegenden Reliefstruktur 24 im Roten größer ist als Eins (oder 100%), konkret ist sogar jeder der beiden Reflexionsgrade größer als 0,5 (oder 50%). Mit herkömmlichen Gestaltungen, die auf der teilweisen Transmission einfallender Strahlung durch die Rasterung einer Farbschicht basieren, ist dies physikalisch nicht möglich. Beispielsweise kann bei einer 50%-Rasterung einer opaken, reflektiven Beschichtung der höher liegenden Reliefstruktur über die Gesamtfläche gemittelt pro Darstellung nicht mehr als 50% des einfallenden Lichts reflektiert werden, so dass selbst höchstens eine Summe R1 + R2 = 1 erreicht werden kann. Das Sicherheitselement 70 der Fig. 4 erscheint daher verglichen mit herkömmlichen Gestaltungen besonders leuchtstark.

Mit Bezug auf die Aufsichten der Figuren 5(a) bis (e) sind bei dem Sicherheitselement 70 die Neigungswinkel der Mikrospiegel der tiefer liegenden Mikrospiegelanordnung 24 im Merkmalsbereich so gewählt, dass sie einen roten Rolling-Bar-Effekt erzeugen, also einen hellen roten Balken 72, der beim Kippen des Sicherheitselements je nach Kipprichtung entlang des Merkmalsbereichs des Sicherheitselements 70 auf bzw. ab zu laufen scheint, wie durch die Pfeile in Fig. 5 für eine der beiden Bewegungsrichtungen angedeutet. Die Neigungswinkel der Mikrospiegel der höher liegenden Mikrospiegelanordnung 34 sind so gewählt, dass sie im Merkmalsbereich gleichzeitig einen gegenläufigen grünen Rolling-Bar-Effekt erzeugen, also einen hellen grünen Balken 74, der beim Kippen des Sicherheitselements jeweils entgegengesetzt zu dem roten Balken 72 der tiefer liegenden Mikrospiegelanordnung 24 läuft.

Durch die Semitransparenz der Beschichtung 36 sind stets, auch in der Überschneidungsstellung, in der sich beide Balken 72, 74 teilweise oder vollständig überschneiden, sowohl der grüne Balken 74 der höher liegenden Mikrospiegelanordnung 34 als auch der rote Balken 72 der tiefer liegenden Mikrospiegelanordnung 24 sichtbar, so dass die beiden Balken 72, 74 für den Betrachter durcheinander hindurch zu laufen scheinen. In der in Fig. 5(c) dargestellten Überschneidungsstellung sieht der Betrachter die rote und grüne Farbe der beiden Mikrospiegelanordnungen 24, 34 am selben Ort, so dass sich durch additive Farbmischung eine sehr helle Mischfarbe ergibt. Der Winkelunterschied zwischen den Kippwinkeln, unter denen einer der Balken rot bzw. grün aufleuchtet, wird hier von der Mitte des Sicherheitselements 70 nach oben bzw. unten immer größer und beträgt am oberen oder unteren Rand beispielsweise 10° oder sogar mehr.

Bei der Herstellung eines Aufbaus nach Fig. 4 gezeigt sind zwei vorteilhafte Varianten möglich: In einer ersten Variante kann die zweite Prägelackschicht 22 direkt auf die erste reflexionserhöhenden Beschichtung 36 aufgebracht und geprägt werden. Dabei kann der Prägelack in einer vorteilhaften Ausgestaltung eingefärbt sein und verleiht dann dem an der zweiten reflexionserhöhenden Beschichtung 26 reflektierten Licht einen zusätzlichen Farbbeitrag. In einer anderen Variante kann die zweite Prägelackschicht 22 mit ihrer Prägung 24 und reflexionserhöhenden Beschichtung 26 auch auf einer anderen Trägerfolie erzeugt und dann auf die erste Trägerfolie 18 mit der Reliefstruktur 34 und deren reflexionserhöhende Beschichtung 36 aufkaschiert werden. In einer vorteilhaften Ausgestaltung kann dabei ein eingefärbter Kaschierkleber verwendet werden um einen zusätzlichen Farbbeitrag bereitzustellen.

Alternativ können hierfür auch ein transparenter Kaschierkleber und eine zusätzliche Farbschicht verwendet werden.

Als weiteres Ausführungsbeispiel, das eine Abwandlung der Gestaltung der Fig. 2 darstellt, ist in Fig. 6 ein Sicherheitselement 80 gezeigt, dessen Aufbau weitgehend dem Aufbau des Sicherheitselements 12 der Fig. 2 entspricht. Bei diesem Ausführungsbeispiel ist allerdings auf der Unterseite der Trägerfolie 18 eine lasierende Farbschicht 82 vorgesehen, die einen zusätzlichen Farbbeitrag für das an der zweiten reflexionserhöhenden Beschichtung 26 reflektierte Licht bereitstellt. Auf die so vorbeschichtete Trägerfolie 18 wurden dann wie bei Fig. 2 jeweils transparente Prägelackschichten 22, 32 aufgebracht, mit dem gewünschten Reliefmuster geprägt und jeweils mit einer reflexionserhöhenden Beschichtung 26, 36 versehen.

Die Oberseite der Anordnung ist über einen Kaschierlack 84 auf einer Trägerfolie 86 mit Releaseschicht 88 aufkaschiert, die Unterseite der Anordnung ist mit einer Klebeschicht 44 zum Übertragen auf ein Zielsubstrat versehen. Eine solche Anordnung eignet sich insbesondere zur Herstellung eines Patchprodukts durch Stanzen und Entgittern, wobei der Aufbau ab der Releaseschicht 88 bis auf die Trägerfolie 86 mit einem Stanzwerkzeug durchschnitten und außerhalb des zu übertragenden Patchbereichs entfernt wird.

In der Darstellung der Fig. 6 sind oben am linken bzw. rechten Rand bereits entgitterte Bereiche angedeutet, in denen nur noch die Trägerfolie 86 verblieben ist. Es versteht sich, dass auf die Farbschicht 82 auch verzichtet werden kann, wenn deren Farbwirkung für das gewünschte Erscheinungsbild nicht erforderlich ist.

Bezugszeichenliste

| | |
|---|---|
| 10 | Banknote |
| 12 | Sicherheitselement |
| 14-A | herauswölbendes Motiv "10" |
| 14-B | herauswölbendes Motiv "Wappen" |
| 16 | Kipprichtung |
| 18 | Trägerfolie |
| 20 | reflektiver Flächenbereich |
| 22 | Prägelackschicht |
| 24 | Mikrospiegelanordnung |
| 26 | zweite reflexionserhöhende Beschichtung |
| 28 | Decklackschicht |
| 32 | Prägelackschicht |
| 34 | Mikrospiegelanordnung |
| 36 | erste reflexionserhöhende Beschichtung |
| 38 | Decklackschicht |
| 40 | Betrachter |
| 40-A, 40-B | Betrachtungspositionen |
| 42 | Flächennormale |
| 44 | Klebeschicht |
| 50 | einfallendes weißes Licht |
| 52 | goldgelbe Reflexionsfarbe |
| 54 | blaue Transmissionsfarbe |
| 56 | blaue Reflexion |
| 60 | Kurve Transmissionsgrad |

| 62 | Kurve Reflexionsgrad |
| 64 | Peak Transmission im Blauen |
| 66 | Dip Reflexionsgrad im Blauen |
| 70 | Sicherheitselement |
| 72 | roter Balken |
| 74 | grüner Balken |
| 80 | Sicherheitselement |
| 82 | lasierende Farbschicht |
| 84 | Kaschierlack |
| 86 | Trägerfolie |
| 88 | Releaseschicht |

**Patentansprüche**

1. Optisch variables Sicherheitselement zur Absicherung von Wertgegenständen, dessen Flächenausdehnung eine darauf senkrecht stehende z-Achse definiert, mit einem reflektiven Flächenbereich, der zumindest zwei, aus unterschiedlichen Betrachtungsrichtungen erkennbare und mit unterschiedlichen Farben erscheinende, optisch variable Effekte zeigt, wobei

   - der reflektive Flächenbereich (20) zwei eigenständige Reliefstrukturen enthält, die in z-Richtung in unterschiedlichen Höhenstufen angeordnet sind und eine tiefer liegende (24) und eine höher liegende Reliefstruktur (34) bilden,
   - die höher liegende Reliefstruktur (34) mit einer dem Reliefverlauf folgenden ersten reflexionserhöhenden Beschichtung (36) versehen ist und die tiefer liegende Reliefstruktur (24) mit einer dem Reliefverlauf folgenden zweiten reflexionserhöhenden Beschichtung (26) versehen ist,
   - die beiden Reliefstrukturen (24, 34) in einem Merkmalsbereich überlappen, und
   - die erste reflexionserhöhende Beschichtung (36) im sichtbaren Spektralbereich mit einer wellenlängenabhängigen Reflexion und Transmission im sichtbaren Spektralbereich ausgebildet wird, so dass
   - die höher liegende Reliefstruktur (34) einen ersten optisch variablen Effekt in einer ersten Farbe zeigt, und

     - die tiefer liegende Reliefstruktur (24) durch die erste reflexionserhöhende Beschichtung (36) hindurch einen zweiten optisch variablen Effekt zeigt, wobei sich der zweite optisch variable Effekt in einer zweiten, unterschiedlichen Farbe zeigt.

2. Sicherheitselement nach Anspruch 1, **dadurch gekennzeichnet, dass**

   durch die Reflexions-Farbwirkung der ersten reflexionserhöhenden Beschichtung die höher liegende Reliefstruktur den ersten optisch variablen Effekt in der ersten Farbe zeigt, und durch die Transmissions-Farbwirkung der ersten reflexionserhöhenden Beschichtung die tiefer liegende Reliefstruktur den zweiten optisch variablen Effekt in der zweiten Farbe zeigt.

3. Sicherheitselement nach Anspruch 1 oder 2, **dadurch gekennzeichnet, dass** die höher liegende Reliefstruktur und/oder die tiefer liegende Reliefstruktur durch Mikrospiegelanordnungen mit gerichtet reflektierenden Mikrospiegeln gebildet sind, insbesondere mit nicht-diffraktiv wirkenden Spiegeln, und vorzugsweise mit planen Spiegeln, Hohlspiegeln und/ oder fresnelartigen Spiegeln.

4. Sicherheitselement nach wenigstens einem der Ansprüche 1 bis 3, **dadurch gekennzeichnet, dass** die beiden eigenständigen Reliefstrukturen unterschiedlich ausgebildet sind.

5. Sicherheitselement nach wenigstens einem der Ansprüche 1 bis 4, **dadurch gekennzeichnet, dass** die erste reflexionserhöhende Beschichtung zumindest in einem Teilbereich des sichtbaren Spektralbereichs eine Transmission von mindestens 35%, vorzugsweise von mindestens 50%, besonders bevorzugt von mindestens 60% aufweist.

6. Sicherheitselement nach wenigstens einem der Ansprüche 1 bis 5, **dadurch gekennzeichnet, dass** die erste reflexionserhöhende Beschichtung zumindest in einem Teilbereich des sichtbaren Spektralbereichs eine Reflexion von mindestens 30%, vorzugsweise von mindestens 50%, besonders bevorzugt von mindestens 70% aufweist.

7. Sicherheitselement nach wenigstens einem der Ansprüche 1 bis 6, **dadurch gekennzeichnet** die erste reflexionserhöhende Beschichtung eine oder mehrere hochbrechende Schichten, bevorzugt dielektrische hochbrechende Schichten enthält, die zumindest in einem Teilbereich des sichtbaren Spektrums einen Brechungsindex von mindestens 1,7, bevorzugt mindestens 2,0 und besonders bevorzugt mindestens 2,2 aufweisen.

8. Sicherheitselement nach wenigstens einem der Ansprüche 1 bis 7, **dadurch gekennzeichnet, dass** die zweite reflexionserhöhende Beschichtung mindestens in einem Teilbereich des sichtbaren Spektrums einen Reflexionsgrad von mindestens 50%, bevorzugt mindestens 75%, besonders bevorzugt mindestens 80%, oder sogar von mindestens 85% aufweist, vorzugsweise, dass die zweite reflexionserhöhende Beschichtung opak mit einer optischen Dichte von mehr als 1,0, insbesondere von mehr als 2,0 ausgebildet ist.

9.  Sicherheitselement nach wenigstens einem der Ansprüche 1 bis 8, **dadurch gekennzeichnet, dass** das Sicherheitselement zumindest in einem Teilbereich Licht eines ersten Wellenlängenbereichs des sichtbaren Spektrums mit einem Reflexionsgrad R1 in einen ersten Betrachtungswinkelbereich und Licht eines zweiten Wellenlängenbereichs des sichtbaren Spektrums mit einem Reflexionsgrad R2 in einen zweiten Betrachtungswinkelbereich lenkt, wobei gilt R1+R2 > 1.

10. Sicherheitselement nach wenigstens einem der Ansprüche 1 bis 9, **dadurch gekennzeichnet, dass**

    - die erste und/oder zweite reflexionserhöhende Schicht im Merkmalsbereich ungerastert, vorzugsweise vollflächig, vorliegt; und/oder
    - zwischen der ersten und zweiten Reliefstruktur eine oder mehrere lichtdurchlässige Farbschichten vorgesehen sind, um den Farbeindruck des optisch variablen Effekts der zweiten Reliefstruktur zu beeinflussen; und/oder
    - oberhalb der ersten reflexionserhöhenden Schicht eine oder mehrere lichtdurchlässige Farbschichten vorgesehen sind, um den Farbeindruck der optisch variablen Effekte der ersten und zweiten Reliefstruktur zu beeinflussen.

11. Sicherheitselement nach wenigstens einem der Ansprüche 1 bis 10, **dadurch gekennzeichnet, dass**

    - die Transmissions-Farbwirkung der ersten reflexionserhöhenden Beschichtung die zweite Farbe bestimmt; oder
    - die Transmissions-Farbwirkung der ersten reflexionserhöhenden Beschichtung zusammen mit einer Reflexions-Farbwirkung der zweiten reflexionserhöhenden Beschichtung und/oder mit mindestens einer der lichtdurchlässigen Farbschichten die zweite Farbe bestimmt; oder
    - eine Reflexions-Farbwirkung der zweiten reflexionserhöhenden Beschichtung und/oder die Farbwirkung mindestens einer der lichtdurchlässigen Farbschichten die zweite Farbe bestimmt.

12. Sicherheitselement nach wenigstens einem der Ansprüche 1 bis 11, **dadurch gekennzeichnet, dass** die erste und zweite Reliefstruktur zumindest bereichsweise einfallendes paralleles Licht in unterschiedliche Winkelbereiche reflektieren, wobei die beiden verschiedenen Winkelbereiche vorzugsweise nicht überlappen und bevorzugt mehr als 3°, besonders bevorzugt mehr als 10° voneinander getrennt sind.

13. Sicherheitselement nach wenigstens einem der Ansprüche 1 bis 12, **dadurch gekennzeichnet, dass** die Ausbildung der höher liegenden Reliefstruktur, insbesondere die Ausrichtung der Mikrospiegel der höher liegenden Mikrospiegelanordnung und/oder die Ausbildung der tiefer liegenden Reliefstruktur, insbesondere die Ausrichtung der Mikrospiegel der tiefer liegenden Mikrospiegelanordnung ortsabhängig variiert um ein jeweils vorgegebenes Motiv, insbesondere ein dreidimensional wirkendes Motiv oder ein Bewegungsmotiv, zu erzeugen.

14. Datenträger mit einem optisch variablen Sicherheitselement nach wenigstens einem der Ansprüche 1 bis 13.

15. Verfahren zum Herstellen eines optisch variablen Sicherheitselements mit einem reflektiven Flächenbereich, der zumindest zwei, aus unterschiedlichen Betrachtungsrichtungen erkennbare, und mit unterschiedlichen Far- ben erscheinende, optisch variable Effekte zeigt, bei dem

    - ein Träger bereitgestellt wird, dessen Flächenausdehnung eine Ebene und eine darauf senkrecht stehende z-Achse definiert,
    - der Träger mit einem reflektiven Flächenbereich (20) versehen wird, der zwei eigenständige Reliefstrukturen enthält, die in z-Richtung in unterschiedlichen Höhenstufen angeordnet sind, und eine tiefer liegende (24) und eine höher liegende Reliefstruktur (34) bilden,
    - die höher liegende Reliefstruktur (34) mit einer dem Reliefverlauf folgenden ersten reflexionserhöhenden Beschichtung (36) versehen wird und die tiefer liegende Reliefstruktur (24) mit einer dem Reliefverlauf folgenden zweiten reflexionserhöhenden Beschichtung (26) versehen wird,
    - die beiden Reliefstrukturen (24,34) in einem Merkmalsbereich überlappend ausgebildet werden,
    - die erste reflexionserhöhende Beschichtung (36) im Merkmalsbereich mit einer wellenlängenabhängigen Reflexion und Transmission im sichtbaren Spektralbereich ausgebildet wird, so dass
    - die höher liegende Reliefstruktur (34) - durch die Reflexions-Farbwirkung der ersten reflexionserhöhenden Beschichtung (36) - einen ersten optisch variablen Effekt in einer ersten Farbe zeigt, und
    - die tiefer liegende Reliefstruktur (24) durch die erste reflexionserhöhende Beschichtung (36) hindurch einen zweiten optisch variablen Effekt zeigt, der sich, durch die Transmissions-Farbwirkung der ersten reflexionserhöhenden Beschichtung (36), in einer zweiten, unterschiedlichen Farbe zeigt.

**Claims**

1. Optically variable security element for safeguarding valuable objects, the surface area of said security element defining a z-axis perpendicular thereto, comprising a reflective surface region exhibiting at least two optically variable effects which are discernible from different viewing directions and appear with different colours, wherein

   - the reflective surface region (20) contains two independent relief structures, which are arranged at different height levels in the z-direction and form a lower-level relief structure (24) and a higher-level relief structure (34),
   - the higher-level relief structure (34) is provided with a first reflection-enhancing coating (36) following the course of the relief and the lower-level relief structure (24) is provided with a second reflection-enhancing coating (26) following the course of the relief,
   - the two relief structures (24, 34) overlap in a feature region,
   and
   - the first reflection-enhancing coating (36) in the visible spectral range is embodied with a wavelength-dependent reflection and transmission in the visible spectral range, such that
   - the higher-level relief structure (34) exhibits a first optically variable effect in a first colour, and
   - the lower-level relief structure (24) exhibits a second optically variable effect through the first reflection-enhancing coating (36),

   wherein the second optically variable effect is exhibited in a second, different colour.

2. Security element according to Claim 1, **characterized in that**

   the higher-level relief structure exhibits the first optically variable effect in the first colour by virtue of the reflection colour effect of the first reflection-enhancing coating, and
   the lower-level relief structure exhibits the second optically variable effect in the second colour by virtue of the transmission colour effect of the first reflection-enhancing coating.

3. Security element according to Claim 1 or 2, **characterized in that** the higher-level relief structure and/or the lower-level relief structure are/is formed by micromirror arrangements with directionally reflective micromirrors, in particular with mirrors having a non-diffractive effect, and preferably with plane mirrors, concave mirrors and/or Fresnel-like mirrors.

4. Security element according to at least one of Claims 1 to 3, **characterized in that** the two independent relief structures are embodied differently.

5. Security element according to at least one of Claims 1 to 4, **characterized in that** the first reflection-enhancing coating has a transmission of at least 35%, preferably of at least 50%, particularly preferably of at least 60%, at least in a sub-range of the visible spectral range.

6. Security element according to at least one of Claims 1 to 5, **characterized in that** the first reflection-enhancing coating has a reflection of at least 30%, preferably of at least 50%, particularly preferably of at least 70%, at least in a sub-range of the visible spectral range.

7. Security element according to at least one of Claims 1 to 6, **characterized in that** the first reflection-enhancing coating contains one or more high refractive index layers, preferably dielectric high refractive index layers, which have a refractive index of at least 1.7, preferably at least 2.0, and particularly preferably at least 2.2, at least in a sub-range of the visible spectrum.

8. Security element according to at least one of Claims 1 to 7, **characterized in that** the second reflection-enhancing coating, at least in a sub-range of the visible spectrum, has a reflectance of at least 50%, preferably at least 75%, particularly preferably at least 80%, or even of at least 85%, preferably **in that** the second reflection-enhancing coating is embodied as opaque with an optical density of more than 1.0, in particular of more than 2.0.

9. Security element according to at least one of Claims 1 to 8, **characterized in that** the security element, at least in a partial region, directs light in a first wavelength range of the visible spectrum with a reflectance R1 into a first viewing angle range and light in a second wavelength range of the visible spectrum with a reflectance R2 into a second viewing angle range, wherein it holds true that R1+R2 > 1.

10. Security element according to at least one of Claims 1 to 9, **characterized in that**

    - the first and/or second reflection-enhancing layer(s) are/is present in the feature region without any grid, preferably over the whole area; and/or
    - one or more light-transmissive colour layers are provided between the first and second relief structures in order to influence the colour impression of the optically variable effect of the second relief structure; and/or
    - one or more light-transmissive colour layers are provided above the first reflection-enhancing layer in order to influence the colour impression of the optically variable effects of the first and second relief structures.

11. Security element according to at least one of Claims 1 to 10, **characterized in that**

- the transmission colour effect of the first reflection-enhancing coating determines the second colour; or
- the transmission colour effect of the first reflection-enhancing coating together with a reflection colour effect of the second reflection-enhancing coating and/or with at least one of the light-transmissive colour layers determine the second colour; or
- a reflection colour effect of the second reflection-enhancing coating and/or the colour effect of at least one of the light-transmissive colour layers determine(s) the second colour.

12. Security element according to at least one of Claims 1 to 11, **characterized in that** the first and second relief structures reflect at least regionally incident parallel light into different angle ranges, wherein the two different angle ranges preferably do not overlap and are separated from one another by preferably more than 3°, particularly preferably more than 10°.

13. Security element according to at least one of Claims 1 to 12, **characterized in that** the embodiment of the higher-level relief structure, in particular the alignment of the micromirrors of the higher-level micromirror arrangement, and/or the embodiment of the lower-level relief structure, in particular the alignment of the micromirrors of the lower-level micromirror arrangement, are/is subject to location-dependent variation in order to produce a respectively predefined motif, in particular a motif with a three-dimensional appearance or a movement motif.

14. Data carrier comprising an optically variable security element according to at least one of Claims 1 to 13.

15. Method for producing an optically variable security element comprising a reflective surface region exhibiting at least two optically variable effects which are discernible from different viewing directions and appear with different colours, wherein

- a carrier is provided, the surface area of which defines a plane and a z-axis perpendicular thereto,
- the carrier is provided with a reflective surface region (20) containing two independent relief structures, which are arranged at different height levels in the z-direction and form a lower-level relief structure (24) and a higher-level relief structure (34),

- the higher-level relief structure (34) is provided with a first reflection-enhancing coating (36) following the course of the relief and the lower-level relief structure (24) is provided with a second reflection-enhancing coating (26) following the course of the relief,
- the two relief structures (24, 34) are embodied so as to overlap in a feature region,
- the first reflection-enhancing coating (36) in the feature region is embodied with a wavelength-dependent reflection and transmission in the visible spectral range, such that
- the higher-level relief structure (34),
- by virtue of the reflection colour effect of the first reflection-enhancing coating (36),
- exhibits a first optically variable effect in a first colour, and
- the lower-level relief structure (24), through the first reflection-enhancing coating (36), exhibits a second optically variable effect, which is exhibited in a second, different colour by virtue of the transmission colour effect of the first reflection-enhancing coating (36).

## Revendications

1. Élément de sécurité optiquement variable pour la protection d'objets de valeur, dont l'étendue de surface définit un axe z qui lui est perpendiculaire, avec une zone de surface réfléchissante qui présente au moins deux effets optiquement variables, reconnaissables à partir de différentes directions d'observation et apparaissant avec des couleurs différentes,

- la zone de surface réfléchissante (20) contenant deux structures en relief indépendantes qui sont agencées à des niveaux de hauteur différents dans la direction z et forment une structure en relief située plus bas (24) et une structure en relief située plus haut (34),
- la structure en relief (34) située plus haut étant pourvue d'un premier revêtement (36) augmentant la réflexion, suivant le tracé du relief, et la structure en relief (24) située plus bas étant pourvue d'un deuxième revêtement (26) augmentant la réflexion, suivant le tracé du relief,
- les deux structures en relief (24, 34) se chevauchant dans une zone de caractéristique, et
- le premier revêtement augmentant la réflexion (36) étant réalisé dans le domaine spectral visible avec une réflexion et une transmission dépendant de la longueur d'onde dans le domaine spectral visible, de telle sorte que

- la structure en relief (34) située plus haut présente un premier effet optiquement variable dans une première couleur, et
- la structure en relief située plus bas (24) présente un deuxième effet optiquement variable à travers le premier revêtement augmentant la réflexion (36),

le deuxième effet optiquement variable présentant une deuxième couleur différente.

2. Élément de sécurité selon la revendication 1, **caractérisé en ce que**

grâce à l'effet de couleur par réflexion du premier revêtement augmentant la réflexion, la structure en relief située plus haut présente le premier effet optiquement variable dans la première couleur, et

grâce à l'effet de couleur par transmission du premier revêtement augmentant la réflexion, la structure en relief située plus bas présente le deuxième effet optiquement variable dans la deuxième couleur.

3. Élément de sécurité selon la revendication 1 ou 2, **caractérisé en ce que** la structure en relief située plus haut et/ou la structure en relief située plus bas sont formées par des agencements de micromiroirs avec des micromiroirs à réflexion dirigée, notamment avec des miroirs à effet non diffractif, et de préférence avec des miroirs plans, des miroirs concaves et/ou des miroirs de type Fresnel.

4. Élément de sécurité selon au moins l'une quelconque des revendications 1 à 3, **caractérisé en ce que** les deux structures en relief indépendantes sont réalisées différemment.

5. Élément de sécurité selon au moins l'une quelconque des revendications 1 à 4, **caractérisé en ce que** le premier revêtement augmentant la réflexion présente, au moins dans une partie du domaine spectral visible, une transmission d'au moins 35 %, de préférence d'au moins 50 %, de manière particulièrement préférée d'au moins 60 %.

6. Élément de sécurité selon au moins l'une quelconque des revendications 1 à 5, **caractérisé en ce que** le premier revêtement augmentant la réflexion présente, au moins dans une partie du domaine spectral visible, une réflexion d'au moins 30 %, de préférence d'au moins 50 %, de manière particulièrement préférée d'au moins 70 %.

7. Élément de sécurité selon au moins l'une quelconque des revendications 1 à 6, **caractérisé en ce que** le premier revêtement augmentant la réflexion contient une ou plusieurs couches hautement réfringentes, de préférence des couches diélectriques hautement réfringentes, qui présentent au moins dans une zone partielle du spectre visible un indice de réfraction d'au moins 1,7, de préférence d'au moins 2,0 et de manière particulièrement préférée d'au moins 2,2.

8. Élément de sécurité selon au moins l'une quelconque des revendications 1 à 7, **caractérisé en ce que** le deuxième revêtement augmentant la réflexion présente, au moins dans une partie du spectre visible, un degré de réflexion d'au moins 50 %, de préférence d'au moins 75 %, de manière particulièrement préférée d'au moins 80 %, ou même d'au moins 85 %, de préférence **en ce que** le deuxième revêtement augmentant la réflexion est réalisé de manière opaque avec une densité optique supérieure à 1,0, notamment supérieure à 2,0.

9. Élément de sécurité selon au moins l'une quelconque des revendications 1 à 8, **caractérisé en ce que** l'élément de sécurité dirige au moins dans une zone partielle de la lumière d'une première plage de longueurs d'onde du spectre visible avec un degré de réflexion R1 dans une première plage d'angles d'observation et de la lumière d'une deuxième plage de longueurs d'onde du spectre visible avec un degré de réflexion R2 dans une deuxième plage d'angles d'observation, avec R1+R2 > 1.

10. Élément de sécurité selon au moins l'une quelconque des revendications 1 à 9, **caractérisé en ce que**

- la première et/ou la deuxième couche augmentant la réflexion est présente dans la zone de caractéristique sans trame, de préférence sur toute la surface ; et/ou
- une ou plusieurs couches de couleur translucides sont prévues entre la première et la deuxième structure en relief afin d'influencer l'impression de couleur de l'effet optiquement variable de la deuxième structure en relief ; et/ou
- au-dessus de la première couche augmentant la réflexion, une ou plusieurs couches de couleur translucides sont prévues pour influencer l'impression de couleur des effets optiquement variables des première et deuxième structures en relief.

11. Élément de sécurité selon au moins l'une quelconque des revendications 1 à 10, **caractérisé en ce que**

- l'effet de couleur par transmission du premier revêtement augmentant la réflexion détermine la deuxième couleur ; ou

- l'effet de couleur par transmission du premier revêtement augmentant la réflexion, conjointement avec un effet de couleur par réflexion du deuxième revêtement augmentant la réflexion et/ou avec au moins une des couches de couleur transmettant la lumière, détermine la deuxième couleur ; ou
- un effet de couleur par réflexion du deuxième revêtement augmentant la réflexion et/ou l'effet de couleur d'au moins une des couches de couleur translucides détermine la deuxième couleur.

**12.** Élément de sécurité selon au moins l'une quelconque des revendications 1 à 11, **caractérisé en ce que** la première et la deuxième structure en relief réfléchissent au moins par zones la lumière incidente parallèle dans des zones angulaires différentes, les deux zones angulaires différentes ne se chevauchant de préférence pas et étant de préférence séparées l'une de l'autre de plus de 3°, de manière particulièrement préférée de plus de 10°.

**13.** Élément de sécurité selon au moins l'une quelconque des revendications 1 à 12, **caractérisé en ce que** la réalisation de la structure en relief située plus haut, notamment l'orientation des micromiroirs de l'agencement de micromiroirs situé plus haut et/ou la réalisation de la structure en relief située plus bas, notamment l'orientation des micromiroirs de l'agencement de micromiroirs situé plus bas, varie en fonction de l'emplacement pour produire un motif respectivement prédéfini, notamment un motif à effet tridimensionnel ou un motif de mouvement.

**14.** Support de données avec un élément de sécurité optiquement variable selon au moins l'une quelconque des revendications 1 à 13.

**15.** Procédé de fabrication d'un élément de sécurité optiquement variable ayant une zone de surface réfléchissante qui présente au moins deux effets optiquement variables reconnaissables à partir de différentes directions d'observation et apparaissant avec des couleurs différentes, dans lequel

- un support est fourni, dont l'étendue de surface définit un plan et un axe z qui lui est perpendiculaire,
- le support est pourvu d'une zone de surface réfléchissante (20) qui contient deux structures en relief indépendantes qui sont agencées à des niveaux de hauteur différents dans la direction z et qui forment une structure en relief située plus bas (24) et une structure en relief située plus haut (34),
- la structure en relief (34) située plus haut est pourvue d'un premier revêtement (36) augmentant la réflexion, suivant le tracé du relief, et la structure en relief (24) située plus bas est pourvue d'un deuxième revêtement (26) augmentant la réflexion, suivant le tracé du relief,
- les deux structures en relief (24, 34) sont formées de manière à se chevaucher dans une zone de caractéristique,
- le premier revêtement augmentant la réflexion (36) est réalisé dans la zone de caractéristique avec une réflexion et une transmission dépendant de la longueur d'onde dans le domaine spectral visible, de telle sorte que
- le relief situé plus haut (34)
- grâce à l'effet de couleur de réflexion du premier revêtement augmentant la réflexion (36)
- présente un premier effet optiquement variable dans une première couleur, et
- la structure en relief située plus bas (24) présente, à travers le premier revêtement augmentant la réflexion (36), un deuxième effet optiquement variable qui, grâce à l'effet de couleur par transmission du premier revêtement augmentant la réflexion (36), présente une deuxième couleur différente.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018005447 A1
- WO 2020011390 A1
- WO 2020011392 A1
- CH 691750 A5
- EP 3415964 A1
- EP 3216620 A1